# Europäisches Patentamt

(19) **European Patent Office**

**Office européen des brevets**

(11) Veröffentlichungsnummer: **0 126 376**
**B1**

(12) **EUROPÄISCHE PATENTSCHRIFT**

(45) Veröffentlichungstag der Patentschrift:
02.09.87

(51) Int. Cl.⁴: **F 21 V 11/02**, F 21 V 5/02

(21) Anmeldenummer: **84105206.1**

(22) Anmeldetag: **08.05.84**

(54) **Blendschutzraster aus lichtbrechendem Material.**

(30) Priorität: **11.05.83 DE 3317338**

(43) Veröffentlichungstag der Anmeldung:
**28.11.84 Patentblatt 84/48**

(45) Bekanntmachung des Hinweises auf die Patenterteilung:
**02.09.87 Patentblatt 87/36**

(84) Benannte Vertragsstaaten:
**AT CH LI SE**

(56) Entgegenhaltungen:
**AT-B-308 901**
**US-A-3 154 254**

(73) Patentinhaber: **Siemens Aktiengesellschaft Berlin und München, Wittelsbacherplatz 2, D-8000 München 2 (DE)**

(72) Erfinder: **Leibig, Joachim, Dipl.- Ing., Ohmstrasse 50, D-8225 Traunreut (DE)**

## Beschreibung

Die Erfindung betrifft ein Blendschutzraster mit im gleichmäßigen Abstand voneinander und parallel zueinander angeordneten Querlamellen mit "Tannenbaumprofil", die aus lichtbrechendem Material bestehen.

Bei einem derartigen, aus der US-A-3 154 254 bekannten Blendschutzraster sind die Prismenabschnitte so bemessen, daß alle auf der einen Seite auf eine solche Querlamelle auftreffenden Strahlen auf der anderen Seite mit einem Neigungswinkel austreten, der gleich oder kleiner als der Grenzwinkel der Freiausstrahlung ist, der gegeben ist durch die Diagonale zwischen der Überkante einer Querlamelle und der Unterkante der benachbarten Querlamelle.

Trotz einer derartigen Bemessung treten jedoch bei einem solchen Blendschutzraster Lichtstrahlen in den Abschirmbereich oberhalb des erwähnten Grenzwinkels der Freiausstrahlung.

Aufgabe der Erfindung ist es, die einzelnen Prismenabschnitte der Querlamellen so auszubilden, daß in den Raum oberhalb des Grenzwinkels der Freiausstrahlung praktisch kein Licht hineinstrahlt.

Die Lösung dieser Aufgabe ist in Anspruch 1 gekennzeichnet. Sie beruht auf der Erkenntnis, die Querlamellen das Licht nicht nur brechen sondern die einzelnen Prismenflächen auch in bestimmten Winkelbereichen reflektieren.

Bei der Erfindung ist der Neigungswinkel der Prismenflächen gerade so gewählt ist, daß der mit dem Grenzwinkel der Totalreflexion einfallende Strahl gerade parallel zu dem Grenzwinkel der Freiausstrahlung reflektiert wird.

Wegen des für alle Prismenabschnitte gleichen Neigungswinkels wirkt bei der Erfindung - im Gensatz zum Stand der Technik nach der AT-B-308 901 - auch der unterste Prismenabschnitt noch lichtbrechend: Infolge dessen werden die von den obersten Prismenabschnitten der benachbarten Querlamelle auf diesen untersten Prismenabschnitt gebrochenen Strahlen nach einer nochmaligen Brechung unter einem Winkel abgestrahlt, der unter dem Grenzwinkel der Freiausstrahlung liegt.

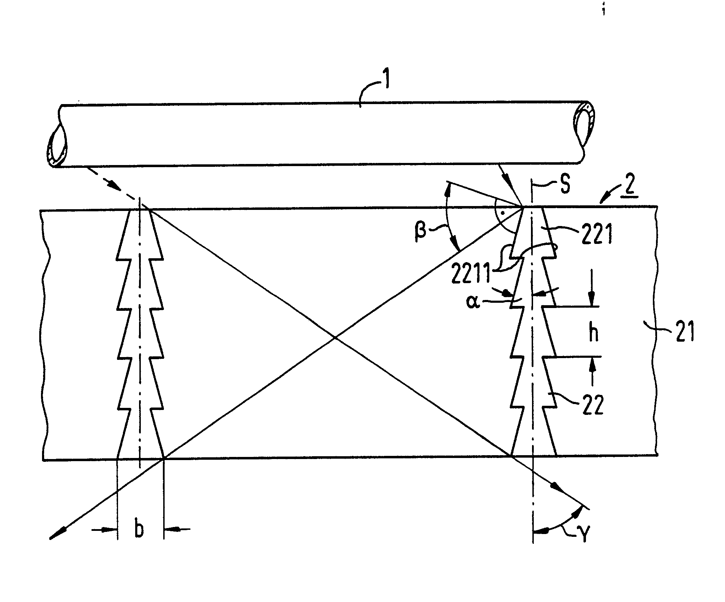

Die Erfindung wird anhand des in der Figur dargestellten Ausführungsbeispieles näher erläutert, das einen Ausschnitt aus einem Blendschutzraster 2 im Längsschnitt zeigt. Zwischen seitlichen Längsreflektoren 21 sind im Abstand voneinander unter einer Leuchtstofflampe 1 zwei Querlamellen aus durchscheinendem, lichtbrechendem Material angeordnet, die im Querschnitt sogenanntes "Tannenbaumprofil" haben: Übereinander sind fünf identische Prismenabschnitte 221 mit gleicher Höhe h von 6 mm angeordnet. Sie sind jeweils symmetrisch zur Symmetrieebene S ausgebildet, wobei jede Prismenfläche 2211 mit der Symmetrieebene einen Neigungswinkel α von 15° einschließt. Daraus resultirt eine Basisbreite b der einzelnen Prismenabschnitte und damit der Querlamelle von 2,1 mm.

In der Figur sind noch der Grenzwinkel γ der Freiausstrahlung - Diagonale zwischen zwei benachbarten Querlamellen - und der Grenzwinkel β der Totalreflexion eingezeichnet. Diese beiden Winkel bestimmen den Maximalwert für den Neigungswinkel nach der Beziehung

α = β + γ - 90°

Ist also beispielsweise der Grenzwinkel γ mit 62° und enzwinkel β der Totalreflexion mit 42° gegeben, dann resultiert daraus ein Neigungswinkel α von 15°.

Bei der Erfindung strahlt praktisch weder gebrochenes noch reflektiertes Licht in den Bereich oberhalb des Grenzwinkels γ der Freiausstrahlung.

## Patentansprüche

1. Blendschutzraster mit im gleichmäßigen Abstand voneinander und parallel zueinander angeordneten Querlamellen mit "Tannenbaumprofil", die aus einem lichtbrechenden Material bestehen, wobei die einzelnen Prismenabschnitte (221) der Querlamellen (22) des Blendschutzrasters (2) gleiche Höhe (h) und gleichen Neigungswinkel (α) der Prismenflächen (2211) gegen die Symmetrieebene (S) haben, dadurch gekennzeichnet, daß der Maximalwert des Neigungswinkels (α) gegeben ist durch die Beziehung

α = β + γ - 90°

wobei β der Grenzwinkel der Totalreflexion - gemessen gegen das Lot auf die Prismenfläche (2211) - und γ der jeweils geforderte Grenzwinkel der Freiausstrahlung, dessen einer Schenkel der Diagonalen zwischen zwei benachbarten Querlamellen entspricht, - gemessen gegen die Symmetrieebene (S) - ist.

2. Blendschutzraster nach Anspruch 7, dadurch gekennzeichnet, daß die Höhe (h) der Prismenabschnitte (221) 6 mm beträgt.

3. Blendschutzraster nach Anspruch 1 oder 2, dadurch gekennzeichnet, daß die einzelnen Querlamellen fünf Prismenabschnitte (221) haben.

## Claims

1. An anti-dazzle screen with mutually-parallel transverse segments of a light-refracting material with a "fir tree profile" disposed at a uniform distance from one another, wherein the individual prism sections (221) of the transverse segments (22) of the anti-dazzle screen (2) have the same height (h) and the same angle of inclination (α) of the prism faces (2211) relative to the plane of symmetry (S), characterised in that the maximum value for the angle of inclination (α) is

determined by the relation

$$\alpha = \beta + \gamma - 90°,$$

where $\beta$ is the limit angle for total internal reflection measured perpendicular to the prism face (2211); and

$\gamma$ is the required limit angle for free emission whose side corresponds to the diagonal between two neighbouring transverse segments, measured relative to the plane of symmetry (S).

2. An anti-dazzle screen as claimed in Claim 1, <u>characterised in that</u> the height (h) of the prism sections (221) is 6 mm.

3. An anti-dazzle screen as claimed in Claim 1 or 2, <u>characterised in that</u> the individual transverse segments have five prism sections (221).

**Revendications**

1. Grille anti-éblouissante comprenant des lamelles transversales équidistantes et parallèles entre elles, ayant un "profil en sapin" et constituées en un matériau réfringent, les tronçons prismatiques individuels (221) des lamelles transversales (22) de la grille anti-éblouissante (2) ayant la même hauteur (h) et le même angle d'inclinaison ($\alpha$) des surfaces prismatiques (2211) par rapport au plan de symétrie (S), caractérisée en ce que la valeur maximale de l'angle d'inclinaison ($\alpha$) est donnée par l'équation:

$$\alpha = \beta + \gamma - 90°$$

$\beta$ étant l'angle limite de la réflexion totale -mesuré par rapport à la normale à la surface prismatique (2211)- et $\gamma$ l'angle limite exigé pour le rayonnement libre, qui est l'angle compris entre le plan de symétrie (S) et la diagonale entre deux lamelles transversales voisines.

2. Grille anti-éblouissante suivant la revendication 1, caractérisée en ce que la hauteur (h) des tronçons prismatiques (221) est de 6 mm.

3. Grille anti-éblouissante suivant la revendication 1 ou 2, caractérisée en ce que les lamelles transversales individuelles ont cinq tronçons prismatiques (221).